# EUROPÄISCHE PATENTSCHRIFT

(11) **EP 2 142 334 B1**
(45) Veröffentlichungstag und Bekanntmachung des Hinweises auf die Patenterteilung: **14.04.2021**
(21) Anmeldenummer: 08749013.2
(22) Anmeldetag: 21.04.2008
(51) Int. Cl.: B23K 35/30, B23K 35/32, B23K 35/02

(54) **WERKSTOFF UND VERFAHREN ZUR BESCHICHTUNG EINER OBERFLÄCHE**
MATERIAL AND METHOD FOR COATING A SURFACE
MATÉRIAU ET PROCÉDÉ D'ENDUCTION D'UNE SURFACE

(30) Priorität: 20.04.2007 DE 102007019150
(43) Veröffentlichungstag der Anmeldung: 13.01.2010
(73) Patentinhaber: Durum Verschleiss-Schutz GmbH, 47877 Willich-Schliefbahn (DE)
(72) Erfinder: KNAUF, Peter, 40629 Düsseldorf (DE)
(74) Vertreter: Bendel, Christian
(86) Internationale Anmeldenummer: PCT/EP2008/003175
(87) Internationale Veröffentlichungsnummer: WO 2008/128737

(56) Entgegenhaltungen:
- EP-A1- 0 972 606
- DE-A1- 2 044 208
- DE-U1- 8 716 743
- GB-A- 1 481 678
- US-A- 4 306 139
- DR. FRANK SCHREIBER: "Wolfram-Schmelzcarbid im Verschleissschutz: Besonderheiten bei der schweisstechnischen Verarbeitung und Qualitätssicherung" INTERNET ARTICLE (DURMAT), [Online] 17. Mai 2005 (2005-05-17), Seiten 1-8, XP002544223 Gefunden im Internet: URL:http://web.archive.org/web/20050517201 237/http://www.durmat.com/PDF-Files/d_SLV2 000.pdf> [gefunden am 2009-09-04]

## Beschreibung

Die vorliegende Erfindung betrifft einen Werkstoff zur Beschichtung einer Oberfläche nach dem Oberbegriff des Anspruchs 1. Die Erfindung betrifft ferner ein Verfahren zum Auftragen einer Beschichtung auf eine Oberfläche gemäß den Merkmalen des Anspruchs 10.

Es ist bekannt, technische Oberflächen mit funktionellen Beschichtungen auszuführen, um den Schutz vor Verschleiß zu verbessern. Beispiele solcher Gegenstände sind Flurplatten von Raupen- oder Kettenfahrzeugen, insbesondere im Tagebau, Wirkflächen von Gesteinsbrechern, Schaufeln und Schneiden von Baggern, Raupen und Kettenfahrzeugen, Bohrköpfe und vieles mehr. Typische Einsatzgebiete solcher Verschleißschutz-Beschichtungen sind Bergwerk, Tagebau und Erdbewegung, Tiefbohren (insbesondere zur Öl- und Gasexploration) und Tunnelbohren. Weitere nicht abschließende Beispiele für den Einsatzzweck sind Zement- und Ziegeleiindustrie und Recyclingindustrie.

DE 40 08 091 C2 beschreibt eine aus einem Werkstoff bestehende Elektrode zum Auftrag einer Verschleißschutzschicht mit einer Matrix aus einer Nickellegierung und eingelagerten Wolframkarbiden für den Auftrag mittels elektrischem Lichtbogenschweißen. Hierbei wird Nickel als überwiegender Bestandteil der Matrix verwendet.

Es ist zudem bekannt, ähnliche Elektroden mit einer eisenbasierten Matrixkomponente zu verwenden, wobei eine Eisenmatrix im Falle des Auftragens durch Lichtbogenschweißen keine brauchbaren Ergebnisse liefert. Die hohen Temperaturen beim Lichtbogenschweißen bewirken im Zusammenhang mit Eisen ein weitgehendes Aufschmelzen der partikelförmigen Wolframkarbide.

US-A-4,306,139 beschreibt ein Auftragsverfahren mittels Schutzgas-Auftragsschweißen ("shielded arc welding"), wobei der aufzutragende Stoff als Füllstabelektrode ("filler rod") ausgebildet ist und sowohl Nickel und Eisen als auch Wolframkarbid enthält. Bei dem Wolframkarbid handelt es sich um herkömmliches WC in einer Partikelgröße zwischen 4 µm und 8 µm. DE 20 44 208 A1 beschreibt einen Schweißstab bestehend aus zwei Komponenten von einerseits 20-90 Gew.% eines oder mehrerer Metallkarbide und andererseits 80-10 Gew.% eines Pulvermetallgemisches. GB-A-1 481 678 beschreibt Material zum thermischen Puverauftrag auf Kesselrohre, wobei als Hartstoff herkömmliches Wolframkarbid WC zugesetzt wird. DE 87 16 743 U1 beschreibt einen Fülldraht zum Erzeugen von Schmelzverbundschichten, umfassend zwei Komponenten, nämlich eine Nickelbasislegierung und ein Anteil bis zu 65 Gew.% an Hartstoffen im Verbundpulver, zum Beispiel herkömmliches Wolframkarbid WC. EP-A-0 972 606 beschreibt eine Schweisselektrode und ein Verfahren zum Aufbringen einer Verschleissschutzschicht, wobei der Werkstoff der Veschleissschutzschicht aus einer Nickellegierungsmatrix mit eingelagerten herkömmlichen Wolframkarbid WC besteht. Dr. Frank Schreiber, Durum Verschleiss-Schutz GmbH: "Wolfram-Schmelzcarbid im Verschleissschutz: Besonderheiten bei der schweisstechnischen Verarbeitung und Qualitätssicherung" beschreibt allgemein die Verwendung von Wolframschmelzkarbid in Verbindung mit einer Nickelbasislegierung oder einer Eisenbasislegierung. Der Erfindung liegt die Aufgabe zugrunde, einen eingangs genannten Werkstoff zur insbesondere metallischen Beschichtung einer Oberfläche bereitzustellen, der bei guter Verschleißschutzwirkung kostengünstig im Verhältnis zu bekannten Werkstoffen mit nickelbasiertem Matrixbestandteil ist.

Diese Aufgabe wird für einen eingangs genannten Werkstoff erfindungsgemäß durch die kennzeichnenden Merkmale des Anspruchs 1 gelöst.

Sämtliche der vorliegend gemachten Prozentangaben eines stofflichen Anteils sind als Gewichts-Prozent zu verstehen. Durch den erheblichen Anteil von zumindest etwa 10 % an entweder Eisen oder Kupfer in der ersten Komponente des Werkstoffs kann der erforderliche Anteil an Nickel reduziert werden, insbesondere bis zu einem Anteil von nur 40% an der ersten Komponente. Gegenüber herkömmlichen Werkstoffen mit nickelbasierter Matrix kann somit ein erheblicher Anteil an Nickel eingespart werden, wobei der Werkstoff insbesondere weiterhin zum Auftrag mittels Lichtbogenschweißens geeignet bleibt. Gegenwärtig beträgt der Kupferpreis nur etwa ein Siebtel des Nickelpreises, wobei der Preis von Eisen noch erheblich niedriger ist.

Der erfindungsgemäße Werkstoff kann auch mittels anderer Auftragsverfahren wie etwa Laser-Auftragsschweißen, Plasma-Auftragsschweißen (PTA) oder Ähnliches aufgebracht werden. Dabei kann der Werkstoff als Pulver vorliegen oder in anderer Form, zum Beispiel als Fülldraht in einigen Anwendungsfällen des Laser-Auftragsschweißens.

In bevorzugter Weiterbildung der Erfindung beträgt der Anteil der zweiten Komponente am Gesamtgewicht des Werkstoffs zwischen etwa 30 % und etwa 70 %, insbesondere zwischen etwa 50 % und etwa 65 %. Eine solche, annähernd jeweils hälftige Mischung von erster Komponente (Matrix) und zweiter Komponente (Hartphase) hat sich als besonders geeignet zur Erzielung einer stabilen und verschleißbeständigen Schicht erwiesen.

Erfindungsgemäss ist die zweite Komponente als ein Hartstoff, insbesondere ein Wolframkarbid, ausgebildet. Besonders vorteilhaft liegt der Hartstoff als partikelförmige Gemischbeimengung in dem Werkstoff vor, zum Beispiel in Form eines gebrochenen oder kugeligen Wolframschmelzkarbids. Insbesondere kann das Wolframkarbid jeweils alternativ oder ergänzend als gesintertes, als geschmolzen und gebrochenes, als kugeliges, als makrokristallines oder als Kobaltgebundenes Wolframkarbid in gemischter, umhüllter oder agglomerierter Form vorliegen. Dem liegt das vorteilhafte Prinzip zugrunde, den Hartstoff zunächst in seiner chemisch, strukturell und geometrisch optimalen Form in Abhängigkeit des jeweiligen Einsatzzwecks zu erzeugen. Dieser vorgeformte Hartstoff, der die zweite Komponente des Werkstoffs ausmacht, wird dann durch Aufschmelzen der ersten Komponente bzw. thermische Phasenumwandlung dieser Komponente in der Beschichtung verteilt und in die wieder erstarrende Matrix eingebunden. Dabei behält der Hartstoff zumindest teilweise seine zuvor in anderen, gegebenenfalls aufwändigen Herstellungsverfahren erzeugten Eigenschaften.

Erfindungsgemäss liegt der Hartstoff zumindest teilweise, insbesondere überwiegend als Wolframschmelzkarbid (WSC) vor. Alternativ oder ergänzend liegt der Hartstoff erfindungsgemäss zumindest teilweise, insbesondere überwiegend als makrokristallines Wolframkarbid vor. Dabei kann insbesondere eine Mischung von WSC und makrokristallinem Wolframkarbid vorgesehen sein. Beide Erscheinungsformen, WSC als auch makrokristallines Wolframkarbid, haben gegenüber zum Beispiel einer gesinterten Form von Wolframkarbid den erheblichen Vorteil, dass die Partikel im Zuge der Verarbeitung, zum Beispiel beim Lichtbogenschweißen, besonders stabil sind und nicht zerfallen oder in Lösung aufgehen. Dies ist im Sinne der vorliegenden Erfindung zumindest dann besonders wichtig, wenn in der ersten Komponente erhebliche Mengen an Eisen vorhanden sind, beispielsweise Eisenanteile von mehr als 35%. Versuche haben gezeigt, dass derartig hohe Eisenanteile, die andererseits einen besonders großen Vorteil an Kostenreduzierung mit sich bringen, aufgrund der bei der Verarbeitung auftretenden Temperaturen bezüglich der Zerstörung (Aufschmelzung oder Auflösung) von Partikeln der zweiten Komponente (Hartstoff) besonders kritisch sind.

Bekannte und geeignete Verfahren für die zumindest für die erste Komponente erfolgende thermische Phasenumwandlung sind zum Beispiel Metall-Schutzgasschweißen (MSG) und besonders bevorzugt Lichtbogenschweißen. Weitere mögliche Verfahren sind unter anderem Plasmapulverschweißen, thermische Spritzverfahren, Lichtbogenspritzen, Pulverflammspritzen, Plasmaspritzen, Hochgeschwindigkeitsflammspritzen (HVOF) oder auch Kaltgasspritzen.

Die auf der Oberfläche entstehende Beschichtung ist eine Verbundschicht, die sich erfindungsgemäß durch das Verhältnis von Nickel einerseits und Eisen und/oder Kupfer andererseits in Verbindung mit einer separaten Hartphase auszeichnet. Je nach Auftragsverfahren und weiteren Anteilen von Metallen können neben den eingelagerten, insbesondere vorgeformten Hartphasen (Hartstoffpartikel) arteigene Hartphasen vorliegen. Die Schicht zeichnet sich durch gute Korrosionsbeständigkeit aus. Die Matrixphase der aufgetragenen Schicht hat in bevorzugter Ausführung eine Härte von mindestens etwa 40 HRC, was insbesondere bei hohen Kupferanteilen erreichbar ist. Bei hohen Eisenanteilen kann je nach Zusammensetzung eine Härte der Matrixphase von über 50 HRC erzielt werden.

Bei einer ersten Ausführungsform eines erfindungsgemäßen Werkstoffs beträgt der Gewichtsanteil an Nickel in der ersten Komponente nicht mehr als etwa 70%, insbesondere zwischen etwa 50% und etwa 70%. Besonders bevorzugt beträgt der Gewichtsanteil an Nickel zwischen etwa 60% und etwa 65%. Vorteilhaft hat der Werkstoff dabei in der ersten Komponente einen Gewichtsanteil an Kupfer zwischen etwa 20% und etwa 40%, insbesondere zwischen etwa 30% und etwa 35%. Bei einer solchen Ausführung, bei der neben dem Nickel ein erheblicher Anteil an Kupfer in der Matrix vorhanden ist, ergeben sich gute antimagnetische Eigenschaften des Werkstoffs. Dies macht den Werkstoff besonders für Anwendungen geeignet, bei denen in der Nähe der Werkstoffschicht empfindliche Elektronik vorhanden ist, zum Beispiel elektronisch gesteuerte Bohrvorrichtungen mit beschichtetem Bohrkopf.

Bei einer hinsichtlich des antimagnetischen Verhaltens besonders geeigneten Detailgestaltung der Erfindung entspricht das Gewichtsverhältnis von Nickel zu Kupfer in der ersten Komponente einem Monel und beträgt insbesondere ungefähr 0,7 zu 0,3. Als Monel bezeichnete Legierungen sind an sich bekannt und haben gute antimagnetische Eigenschaften bei zudem besonders geringer Schrumpfung. Auch diese Eigenschaft kommt einem erfindungsgemäßen Werkstoff im Zuge des thermischen Auftrags zugute. Dass Nickel und Kupfer im Verhältnis eines Monels vorliegen schließt nicht aus, dass zudem weitere metallische Bestandteile in der ersten Komponente vorhanden sind.

Erfindungsgemäss beträgt der Anteil an Bor dabei zwischen etwa 0,5 % und etwa 6%, insbesondere zwischen etwa 1 % und etwa 3%. Ein solcher Boranteil führt zu einer besonders guten Härte der Matrixkomponente.

Bei einer besonders bevorzugten Ausführungsform der Erfindung, insbesondere bei einer Version mit wesentlichem Anteil an Eisen in der ersten Komponente, beträgt der Anteil an Bor dabei zwischen etwa 2,5 % und etwa 5,5%.

Ein vorteilhafter weiterer, alternativer oder zusätzlicher Anteil in der ersten Komponente ist Silizium mit einem Gewichtsanteil von nicht mehr als etwa 5 %, bevorzugt zwischen etwa 1 % und etwa 2 %, insbesondere bevorzugt etwa 1,5 %. Der Anteil von Silizium im Fall von pulverförmigem Werkstoff zum Plasma-Auftragsschweißen ist meist etwas höher (typisch 3%-4%) als bei Fülldrähten und Elektroden (typisch 0,5%-1%).

Ein vorteilhafter weiterer, alternativer oder zusätzlicher Anteil in der ersten Komponente ist Aluminium mit einem Gewichtsanteil von nicht mehr als etwa 7 %.

Ein vorteilhafter weiterer, alternativer oder zusätzlicher Anteil in der ersten Komponente ist Titan mit einem Gewichtsanteil von nicht mehr als etwa 3 %.

Ein erfindungsgemäss weiterer Anteil in der ersten Komponente ist Eisen mit einem Gewichtsanteil von nicht mehr als etwa 6 % bei einem gleichzeitigen Anteil an Kupfer von mehr als 10%. Ein solcher kleinerer Eisenanteil kann die Härte der Matrix verbessern, ohne die antimagnetischen Eigenschaften deutlich zu verschlechtern.

Ein vorteilhafter weiterer, alternativer oder zusätzlicher Anteil in der ersten Komponente ist Vanadium mit einem Gewichtsanteil von nicht mehr als etwa 14 %. Weiterhin alternativ oder ergänzend kann Niob mit einem Gewichtsanteil von nicht mehr als etwa 11 %, Molybdän mit nicht mehr als etwa 12 % und/oder Wolfram mit nicht mehr als etwa 10 % enthalten sein.

Bei einer bevorzugten Ausführungsform der Erfindung, insbesondere bei Vorliegen eines wesentlichen Anteils an Eisen in der ersten Komponente, enthält die erste Komponente einen Gewichtsanteil von Molybdän von weniger als 5%, insbesondere von nicht mehr als etwa 4%. In bevorzugter Detailgestaltung beträgt der Gewichtsanteil von Molybdän dabei wenigstens etwa 1%, insbesondere wenigstens etwa 1,5 %. Durch Versuche und Messungen hat sich gezeigt, dass ein gewisser Mindestanteil an Molybdän insbesondere in Verbindung mit hohem Eisenanteil (Nickel-Eisen-Matrix) die mechanischen Eigenschaften der den Hartstoff einbindenden Matrix (bzw. der aufgebrachten ersten Komponente) weiter verbessert. Ein Optimum der günstigen Eigenschaften insbesondere im Fall hoher Eisenanteile wurde jedoch dann wieder verlassen, wenn der Anteil an Molybdän in einem Bereich von 5% oder mehr liegt.

Ein vorteilhafter weiterer, alternativer oder zusätzlicher Anteil in der ersten Komponente ist Chrom mit einem Gewichtsanteil zwischen etwa 5 % und etwa 33 %.

Bei einer zweiten alternativen Ausführungsform der Erfindung ist es vorgesehen, dass die erste Komponente einen Gewichtsanteil an Eisen von mehr als 10 % enthält. Zur Vermeidung negativer Effekte insbesondere bei Auftrag mittels Lichtbogen beträgt der Gewichtsanteil an Eisen erfindungsgemäss nicht mehr als etwa 60 %, insbesondere bevorzugt zwischen etwa 40 % und etwa 60 %. In optimierter vorteilhafter Ausführung liegt der der Gewichtsanteil an Eisen zwischen etwa 42 % und etwa 48 %. Hierbei beträgt der Gewichtsanteil an Nickel in der ersten Komponente nicht mehr als etwa 70%, insbesondere zwischen etwa 40% und etwa 60%, beträgt. In optimaler Ausgestaltung beträgt der Gewichtsanteil an Nickel in der ersten Komponente zwischen etwa 52% und etwa 58%. Insgesamt wird hierdurch eine erhebliche Einsparung von bis zur etwa der Hälfte an dem sehr kostspieligen Bestandteil Nickel erzielt, wobei das Nickel weitgehend durch Eisen ersetzt wird, ohne dass die Auftragung der Schicht verschlechtert wird. Insbesondere wird durch den verbleibenden hohen Nickelanteil ein Auftrag mittels Lichtbogen, zum Beispiel Lichtbogenschweißen, ermöglicht, ohne dass Probleme mit einem unerwünschten Aufschmelzen der zweiten Komponente (Hartstoffe wie etwa Wolframkarbid) auftreten.

Zur Verbesserung der Härte der Matrix kann die erste Komponente bevorzugt einen Gewichtsanteil an Bor von weniger als etwa 10 % enthalten. Erfindungsgemäss beträgt der Anteil an Bor zwischen etwa 0,5 % und etwa 5%, insbesondere zwischen etwa 2 % und etwa 3%.

Weiterhin erfindungsgemäss hat die erste Komponente einen Gewichtsanteil an Silizium von nicht mehr als etwa 5 %, bevorzugt zwischen etwa 1 % und etwa 2 % und insbesondere bevorzugt etwa 1,5 %. Es können weitere Anteile an insbesondere metallischen Komponenten in der ersten Komponente vorhanden sein. Erfindungsgemäss, aber nicht abschließend können dies jeweils kumulativ oder alternativ Aluminium (bis zu etwa 7%, Vanadium (bis zu etwa 14 %), Niob (bis zu etwa 11 %), Molybdän (bis zu etwa 12 %), Wolfram (bis zu etwa 10 %) oder Chrom (bevorzugt zwischen 5 % und 33 %) sein.

Zur Sicherstellung einer besonders guten Härte der Matrix kann es je nach Anforderungen vorgesehen sein, dass die erste Komponente neben einem Anteil an Eisen von mehr als 10 % einen Anteil an Kupfer von weniger als etwa 10% aufweist.

Je nach gestellten Anforderungen kann ein erfindungsgemäßer Werkstoff aber auch sowohl einen Anteil an Eisen von mehr als etwa 10 % als auch einen Anteil von Kupfer mehr als etwa 10 % aufweisen.

Bei einer besonders bevorzugten Ausführungsform der Erfindung ist der Werkstoff gegenständlich in Form eines Fülldrahts mit den Merkmalen des Anspruchs 7 ausgeformt. Dabei liegt vorteilhaft in Form eines zum

Beispiel röhrchenförmigen Mantel des Fülldrahts im Wesentlichen die erste Komponente zur Erzeugung einer Matrix vor. Dieser metallische und elektrisch leitende Fülldrahtmantel umfängt dabei vorteilhaft eine Füllsubstanz, die im Wesentlichen die zweite Komponente zur Erzeugung einer Hartphase umfasst. Hierdurch kann insbesondere eine Lichtbogen-Schweißelektrode bereitgestellt werden.

Vor allem für den Einsatz als verbrauchender Schweißdraht kann der Fülldraht einen insbesondere in der Füllsubstanz enthaltenen, nichtmetallischen Zuschlagstoff aufweisen. Um beim Auftrag vollständig verfliegen zu können oder um zumindest einen nicht zu großen Einfluss auf die Qualität der aufgebrachten Schicht zu haben, hat der Zuschlagstoff bevorzugt einen Gewichtsanteil von nicht mehr als etwa 2 % des Gesamtgewichts des Fülldrahts. Auf bekannte Weise kann der Zuschlagstoff ein Bindemittel und/oder ein Salz oder auch weitere Stoffe enthalten.

Obwohl ein erfindungsgemäßer Fülldraht meist den überwiegenden Teil der ersten Komponente im Fülldrahtmantel enthalten wird und den überwiegenden Teil der zweiten Komponente als Hartstoff in der vom Mantel umgebenen Füllung, so werden einige Bestandteile der ersten Komponente wie zum Beispiel Bor regelmäßig in der Füllung beigemischt, wobei sie sich dann im Zuge des Auftrags in die den Hartstoff einschließende Matrix einbinden.

Allgemein vorteilhaft kann der Werkstoff im Sinne der Merkmale des Anspruchs 8 als Elektrode zum Lichtbogenschweißen ausgebildet sein. Hierdurch ist insbesondere die Möglichkeit eines einfachen Auftrags des Werkstoffs am Ort des Einsatzes gegeben, wobei andere aufwendige spezielle Auftragsvorrichtungen als ein Lichtbogenschweißgerät und dessen übliches Zubehör nicht erforderlich sind.

Eine solche Elektrode kann als Draht- oder Stabelektrode ausgebildet sein. In diesem Zusammenhang kann der Werkstoff insbesondere ein Bindemittel umfassen. Solche Bindemittel ermöglichen oder verbessern die Verbindung der beiden Komponenten zu einer Draht- oder Stabelektrode.

Die Erfindung umfasst zudem eine Vorrichtung mit einer insbesondere metallischen Oberfläche nach den Merkmalen des Anspruchs 9 Dabei ist der Werkstoff als Beschichtung auf die Oberfläche aufgetragen In der auf die Oberfläche aufgetragenen Form befindet sich die Hartphase in der Matrixphase eingebunden, welche vorrangig aus der ersten Komponente des Werkstoffs mittels Phasenumwandlung hervorgeht. Die Matrix, deren größte einzelne Beimengung Nickel ist, kann dabei je nach Ausgestaltung der ersten Komponenten mehrere miteinander vermischte Phasen aufweisen. Die Matrix ist dabei regelmäßig von hoher Härte, insbesondere im Bereich von 40 HRC und mehr. Im Vergleich zu der "Hartphase", die aus der zweiten Komponente hervorgeht, ist die Härte der Matrix jedoch regelmäßig erheblich kleiner. Auf Wolframkarbid basierende Anteile der Hartphase können annähernd die Härte von Diamant erreichen und tragen somit vorrangig zu der hohen Verschleißfestigkeit der auf die Oberfläche der Vorrichtung aufgetragenen Beschichtung bei.

In einer besonders bevorzugten Ausführungsform umfasst die Vorrichtung einen Bohrkopf, insbesondere einen Bohrkopf zur Öl- und Gasexploration. Moderne Bohrvorrichtungen insbesondere zur Rohstoffexploration können nicht nur vertikal bzw. linear, sondern auch waggerecht in der Tiefe vorstoßen. Hierzu umfasst das Bohrgerät in unmittelbarer Nähe hinter dem eigentlichen, abtragenden Bohrkopf Antriebsmittel, Steuerelektronik und Messsensorik. Diese Bauteile können durch insbesondere bewegte Magnetfelder gestört werden, weswegen ein antimagnetisches Verhalten des Bohrkopfs und insbesondere einer darauf vorliegenden Verschleißschutz-Beschichtung gewünscht ist. Durch die erfindungsgemäße Verwendung von Kupfer als wesentlichen Legierungsbestandteil der Matrix kann somit die Verschleißschutzbeschichtung antimagnetisch gehalten werden.

Alternativ kann die Vorrichtung als eine beschichtete Flurplatte, insbesondere für Ketten- oder Raupenfahrzeuge, ausgebildet sein. Zum Beispiel bei Erdbewegungen oder im Tagebau mittels Braunkohlebaggern oder ähnlichen Großgeräten ist es gewünscht, die Flurplatten vor zu schnellem Verschleiß zu schützen.

Allgemein bevorzugt kann die Vorrichtung als mit dem Werkstoff beschichtetes Halbzeug ausgebildet sein, welches erst durch weitere Fertigungsschritte wie zum Beispiel Anschrauben oder Anschweißen seinen Einsatzzweck erlangt.

In einer besonders bevorzugten Ausführungsform ist die Beschichtung der Oberfläche zumindest teilweise mittels Lichtbogenschweißen erfolgt. Lichtbogenschweißen erlaubt insbesondere am Einsatzort einer Vorrichtung wie zum Beispiel eines Explorationsbohrer die insbesondere instandsetzende Beschichtung mit erfindungsgemäßem Werkstoff. Im Falle von Explorationsbohrungen kann dies verhindern, dass Bohrköpfe aufwendig und teuer transportiert werden müssen, da alternative Aufbringungsverfahren als eine Beschichtung mittels Lichtbogen an solchen Einsatzorten regelmäßig nicht zur Verfügung stehen.

Die Aufgabe der Erfindung wird zudem durch ein Verfahren mit den Merkmalen des Anspruchs 10 gelöst. Dabei wird ein erfindungsgemäßer Werkstoff aufgeschmolzen und auf eine Oberfläche aufgetragen, um so einen Verschleißschutz der Oberfläche zu erlangen. In bevorzugter Ausführung erfolgt das Aufschmelzen und Auftragen dabei mittels Lichtbogenschweißen, insbesondere mittels einer Fülldrahtelektrode. Ein Auftrag mittels Lichtbogenschweißen ist besonders ortsunabhängig und preiswert, wobei zudem eine einfache Schulung des den Werkstoff aufbringenden Personals ermöglicht ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung näher beschrieben und anhand der anliegenden Zeichnung näher erläutert.

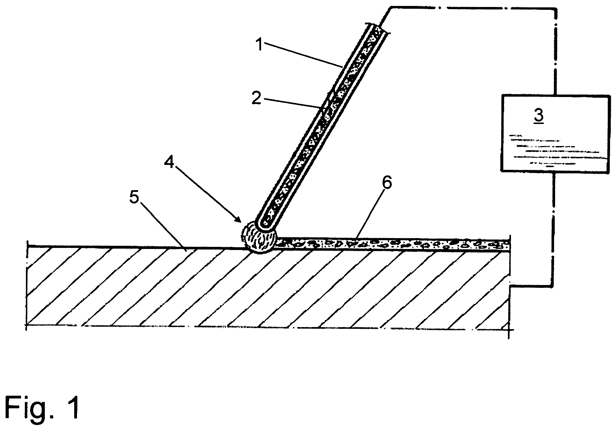

- Fig. 1: zeigt einen Fülldraht gemäß den Ausführungsbeispielen der Erfindung.

Bei einem ersten bevorzugten Ausführungsbeispiel der Erfindung umfasst ein erfindungsgemäßer Werkstoff folgende Komponenten und Anteile, jeweils in Gewichts-Prozent:
Erste Komponente (Gewichtsanteil 50 % am Werkstoff):
- 60 % - 65 % Nickel;
- 30 % -35 % Kupfer, wobei der Anteil Kupfer im Verhältnis zum Nickelanteil wie bei einem Monel ist,
- 2 % Eisen;
- 1 % - 2 % Bor.

Zweite Komponente (Gewichtsanteil 50 % am Werkstoff):
- Gebrochenes oder sphärisches Wolframschmelzkarbid ("WSC") als Hartstoff. Die Korngröße des WSC ist je nach Anforderungen angepasst. Das WSC kann auf bekannte Weise insbesondere Kobalt oder auch andere Elemente als legierten Zusatzstoff enthalten;
- geringe Mengen (0,1 % - 2 % Anteil am Gesamtgewicht des Werkstoffs) an Zuschlagstoffen wie zum Beispiel Salze oder Bindemittel, insbesondere zur Verbesserung der Eigenschaften beim Auftragen mittels Lichtbogenschweißen.

Der Werkstoff gemäß dem ersten Ausführungsbeispiel liegt als Fülldraht vor (siehe Fig. 1). Dabei wird ein insbesondere längsseitig gefalztes Röhrchen 1 aus dem homogen metallischen Material der ersten Komponente hergestellt. Je nach Ausführung als Stab oder Draht wird das Röhrchen während oder nach seiner Herstellung mit der zweiten Komponente 2 gefüllt. Durch Lichtbogenschweißen mittels einer elektrischen Energiequelle 3 wird der Fülldraht in einem Lichtbogen 4 aufgeschmolzen und auf ein zu beschichtendes Werkstück 5 aufgebracht. Insbesondere ist bei diesem Auftrag zumindest im Fall von Wolframkarbid als Hartstoff gewünscht, dass die als Partikel vorliegende zweite Komponente 2 nicht aufgeschmolzen wird, sondern die Partikel in der aufgebrachten Schicht 6 möglichst intakt in der aufgeschmolzenen und wieder erstarrten ersten Komponente als Matrix eingebunden sind.

Durch einen Werkstoff bzw. Fülldraht gemäß dem ersten Ausführungsbeispiel wird ein Werkstoff zur insbesondere antimagnetischen Beschichtung einer Oberfläche bereitgestellt. Die Beschichtung erfolgt mittels thermischer Phasenumwandlung, insbesondere mittels Lichtbogenschweißen. Dabei wird der insgesamt den Werkstoff ausbildende Fülldraht als auftragend verbrauchende Elektrode eines Lichtbogen-Schweißgeräts verwendet.

Diese antimagnetische Verschleißschutz-Beschichtung wird auf einen Bohrkopf zur Rohstoff-Explorationsbohrung aufgetragen. Regelmäßig umfassen solche Bohrköpfe Rollenmeißel, die mit einer besonders harten Beschichtung versehen sind. Der Auftrag durch Lichtbogenschweißen wird insbesondere zu Reparaturzwecken und zur Wiederinstandsetzung abgenutzter Bohrköpfe am Ort der Bohrung durchgeführt.

Bei einem zweiten bevorzugten Ausführungsbeispiel der Erfindung umfasst ein erfindungsgemäßer Werkstoff folgende Komponenten und Anteile, jeweils in Gewichts-Prozent:
Erste Komponente (Gewichtsanteil 50 % am Werkstoff):
   - 52 % - 58 % Nickel;
   - 42 % - 48 % Eisen;
   - 2 % - 3 % Bor.
Zweite Komponente (Gewichtsanteil 50 % am Werkstoff):
   - Gebrochenes oder sphärisches Wolframschmelzkarbid ("WSC") als Hartstoff. Die Korngröße des WSC ist je nach Anforderungen angepasst. Das WSC kann auf bekannte Weise insbesondere Kobalt oder auch andere Elemente als legierten Zusatzstoff enthalten;
   - geringe Mengen (0,1 % - 2 % Anteil am Gesamtgewicht des Werkstoffs) an Zuschlagstoffen wie zum Beispiel Salze oder Bindemittel, insbesondere zur Verbesserung der Eigenschaften beim Auftragen mittels Lichtbogenschweißen.

Unter Wolframschmelzkarbid ("WSC") versteht man dabei zum Beispiel einen Werkstoff, bei dem Wolfram und ein spezielles Graphit gemischt und in einen Schmelztiegel eingebracht werden. Das Gemisch wird dann bei sehr hohen Temperaturen von z.B. 3000 °C und mehr geschmolzenen, in Graphitformen abgegossen und sehr schnell abgekühlt. Das resultierende WSC wird nachfolgend gemahlen, gebrochen oder anderweitig in die gewünschte Partikelform gebracht.

Unter makrokristallinem Wolframkarbid, das gelegentlich auch als monokristallines Wolframkarbid bezeichnet wird, versteht man einen Werkstoff, bei dem in einem chemischen Prozess Kristalle aus einer Matrix, zum Beispiel einer Eisen- oder Kobaltmatrix, Wolframkarbid-Kristalle erzeugt werden.

Sowohl WSC als auch makrokristallines Wolframkarbid unterscheiden sich von herkömmlichem, zunächst gemischten, gemahlenen und verpressten und nachfolgend gesintertem Wolframkarbid durch ihre besonders gute Stabilität bezüglich einem Aufschmelzen der Partikel beim Auftrag auf ein Werkstück mittels Lichtbogenschweißen oder anderer Verfahren.

Der Werkstoff des zweiten Ausführungsbeispiels zeichnet sich bei guter Beibehaltung seiner abrasiven und korrosiven Eigenschaften im Verhältnis zu einer bekannten reinen Nickelmatrix durch besonders kostengünstige Herstellung aus. Er ist zum Auftrag mittels Lichtbogenschweißen, insbesondere in Form eines Fülldrahts (siehe Beschreibung des ersten Ausführungsbeispiels und Fig. 1), geeignet. Bei einem dritten bevorzugten Ausführungsbeispiel der Erfindung liegt ebenfalls ein hoher Anteil von Eisen zusammen mit Nickel vor, um gegenüber einer reinen Nickelmatrix erhebliche Kosten bei vergleichbarer Qualität einsparen zu können:
Erste Komponente (Gewichtsanteil 50 % am Werkstoff):
   - 1 %-4 % Molybdän;
   - 2 % - 5,5 % Bor;
   Rest Nickel und Eisen im Verhältnis (Ni:Fe) zwischen 48:52 und 55:45.
Zweite Komponente (Gewichtsanteil 50 % am Werkstoff):
   - Gebrochenes oder sphärisches Wolframschmelzkarbid ("WSC") als Hartstoff. Die Korngröße des WSC ist je nach Anforderungen angepasst. Das WSC kann auf bekannte Weise insbesondere Kobalt oder auch andere Elemente als legierten Zusatzstoff enthalten;
   - geringe Mengen (0,1 % - 2 % Anteil am Gesamtgewicht des Werkstoffs) an Zuschlagstoffen wie zum Beispiel Salze oder Bindemittel, insbesondere zur Verbesserung der Eigenschaften beim Auftragen mittels Lichtbogenschweißen.

Auch hier ist liegt das Material in Form eines Fülldrahts gemäß Fig. 1 vor, bei dem die erste Komponente im Wesentlichen den Fülldrahtmantel 1 bildet und die zweite Komponente und gegebenenfalls die Zuschlagstoffe die Füllung 2 bilden. Einige Bestandteile der die Matrix bildenden ersten Komponente wie etwa Bor sind dabei als Beimischung in dem Füllstoff enthalten.

Ein weiteres Ausführungsbeispiel der Erfindung ist ebenfalls als Fülldraht gemäß Fig. 1 ausgeformt und umfasst folgende Bestandteile:
Ein legiertes Band zur Ausformung des Fülldrahtmantels besteht aus
- 51% Ni,
- 48% Fe,
- 0,5% Mn, und
- 0,1% Si.

Sämtliche Bestandteile des Fülldrahtmantels gehören zu der ersten Komponente.

Ein Pulver zur Füllung des Fülldrahtes besteht aus
- 5,5% Bor (gehört zur ersten Komponente),
- 2,5 % NaF-Silikat (Zuschlagstoff, insbesondere zur Verbesserung der Eigenschaften beim Lichtbogenschweißen),
- 92% Wolframschmelzkarbid und/oder makrokristallines Wolframkarbid.

Die Gewichtsverhältnisse von Mantel und Füllung hängen in gewissen Bereichen von der Dimension und Form des Fülldrahtes ab. Bei einem Drahtdurchmesser von 1,6 mm beträgt das Gewicht der Füllung bevorzugt etwa 50%-54%. Bei einem Drahtdurchmesser von 2,4 mm beträgt das Gewicht der Füllung bevorzugt etwa 58% bis 62%.

Bei einem weiteren Ausführungsbeispiel der Erfindung liegt der Werkstoff als Pulver für Plasma-Auftragsschweißen vor. Die erste Komponente (Matrix) umfasst dabei folgende Bestandteile:
- 52% Ni,
- 3,0%-3,2% Si,
- 3,0%-3,2% Bor
Rest Fe (etwa 42%).

Die zweite Komponente besteht aus Wolfram-Schmelzkarbid und/oder makrokristallinem Wolframkarbid. Ihr Gewichtsanteil an der Gesamtmenge des Pulvers liegt zwischen etwa 30% und etwa 70%, insbesondere etwa der Hälfte.

## Patentansprüche

1. Werkstoff zur Beschichtung einer Oberfläche mittels zumindest teilweiser thermischer Phasenumwandlung, umfassend eine erste Komponente mit mehreren metallischen Bestandteilen zur Erzeugung einer Matrix, und
eine zweite Komponente zur Erzeugung einer in der Matrix eingeschlossenen Hartphase,
wobei die erste Komponente, bezogen auf ihr Gesamtgewicht, einen Anteil von wenigstens etwa 40 % Nickel aufweist,
wobei die zweite Komponente einen Anteil am Gesamtgewicht des Werkstoffs zwischen etwa 20 % und etwa 80 % aufweist, wobei
die erste Komponente bezogen auf ihr Gesamtgewicht einen Anteil von zumindest etwa 10 %, insbesondere zumindest etwa 20%, eines weiteren Metalls aus der Gruppe Kupfer oder Eisen aufweist,
**dadurch gekennzeichnet, dass**
die zweite Komponente als ein Hartstoff ausgebildet ist,
- wobei der Hartstoff zumindest teilweise, insbesondere überwiegend als Wolframschmelzkarbid (WSC) vorliegt, oder
- wobei der Hartstoff zumindest teilweise, insbesondere überwiegend als makrokristallines Wolframkarbid vorliegt,
wobei die zweite Komponente einen Anteil von 0,1 % bis 2 % am Gesamtgewicht des Werkstoffs an Zuschlagstoffen umfasst; und wobei die erste Komponente einen Gewichtsanteil an Nickel von nicht mehr als 70 % hat, und zusätzlich einen Gewichtsanteil an Kupfer von 20 % bis zu 40 %, und zumindest Eisen mit einem Gewichtsanteil von nicht mehr als 6 %, und einen Anteil an Bor zwischen 0,5 % und 6 %;
oder wobei die erste Komponente einen Gewichtsanteil an Nickel von nicht mehr als 70 % hat, und zusätzlich einen Gewichtsanteil an Eisen von 10 % bis 60 %, und zumindest einen Anteil an Bor zwischen 0,5 % und 5 %;
und wobei insbesondere die erste Komponente zusätzlich weitere Anteile an metallischen Komponenten jeweils kumulativ oder alternativ wie Aluminium bis zu etwa 7 %, Vanadium bis zu etwa 14 %, Niob bis zu etwa 11 %, Molybdän bis zu etwa 12 %, Wolfram bis zu etwa 10 %, Chrom zwischen 5 % und 33 %, Silizium mit einem Gewichtsanteil von nicht mehr als etwa 5 %, oder Titan mit einem Gewichtsanteil von nicht mehr als etwa 3 %, umfasst.

2. Werkstoff nach einem der vorhergehenden Ansprüche, **dadurch gekennzeichnet, dass** der Anteil an Bor zwischen etwa 1 % und etwa 3%, beträgt.

3. Werkstoff nach einem der vorhergehenden Ansprüche, **dadurch gekennzeichnet, dass** die erste Komponente einen Gewichtsanteil von Molybdän von wenigstens etwa 1 %, insbesondere von wenigstens etwa 1,5 %, enthält.

4. Werkstoff nach einem der vorhergehenden Ansprüche, **dadurch gekennzeichnet, dass** die erste Komponente einen Gewichtsanteil an Eisen von mehr als 35%, insbesondere von mehr als etwa 37%, enthält.

5. Werkstoff nach Anspruch 4, **dadurch gekennzeichnet, dass** der Gewichtsanteil an Eisen nicht mehr als etwa 50 %, insbesondere zwischen etwa 40 % und etwa 50 %, beträgt.

6. Werkstoff nach einem der Ansprüche 4 bis 5, **dadurch gekennzeichnet, dass** der Gewichtsanteil an Nickel in der ersten Komponente zwischen etwa 40% und etwa 60%, beträgt.

7. Fülldraht, umfassend einen Mantel und eine von dem Mantel umschlossene Füllsubstanz, **dadurch gekennzeichnet, dass** der Fülldraht insgesamt einen Werkstoff nach einem der Ansprüche 1 bis 6 ausbildet.

8. Elektrode zum Lichtbogenschweißen, **dadurch gekennzeichnet, dass** die Elektrode einen Werkstoff nach einem der Ansprüche 1 bis 6 umfasst.

9. Vorrichtung mit einer insbesondere metallischen Oberfläche, **dadurch gekennzeichnet, dass** die Oberfläche mit einem Werkstoff nach einem der Ansprüche 1 bis 6 beschichtet ist, wobei insbesondere die Vorrichtung einen Bohrkopf umfasst, insbesondere einen Bohrkopf zur Öl- und Gasexploration.

10. Verfahren zum Auftrag einer harten Schicht auf eine Oberfläche, umfassend den Schritt Aufschmelzen und Auftragen eines Werkstoffs nach einem der Ansprüche 1 bis 6 auf die Oberfläche, wobei insbesondere das Aufschmelzen und Auftragen des Werkstoffs auf die Oberfläche mittels Lichtbogenschweißen, insbesondere mittels einer Fülldrahtelektrode, erfolgt.

## Claims

1. Material for coating a surface by at least partial thermal phase transformation, comprising
a first component with several metallic ingredients for the formation of a matrix, and
a second component for the formation of a hard phase, the hard phase being enclosed in the matrix,
wherein the first component, with reference to its total weight, has a share of at least 40 % of nickel,
wherein the second component has a share of between about 20% and about 80% of a total weight of the material,
wherein
the first component, with reference to its total weight, has a share of at least about 10%, in particular about 20%, of a further metal from the group iron or copper,
**characterized in that**
the second component is provided as a hard material,
- wherein the hard material is provided at least partially, in particular predominantly, as fused tungsten carbide (FTC), or
- wherein the hard material is provided at least partially, in particular predominantly, as macrocrystalline tungsten carbide, wherein the second component comprises a share of additives of between 0.1 % and 2 % of the total weight of the material, and wherein the first component has a weight share of nickel of not more than 70% and an additional weight share of copper between 20 % and 40%, and at least iron with a weight share of not more than 6 %, and a share of boron between 0.5 % and 6 %,
or wherein the first component has a weight share of nickel of not more than 70% and an additional weight share of iron between 10 % and 60%, and at least a share of boron between 0.5 % and 5%,
and in particular wherein the first component comprises further shares of metallic components, in each case cumulatively or alternatively, like aluminium up to about 7%, vanadium up to about 14 %, niobium up to about 11%, molybdenum up to about 12 %, tungsten up to about 10 %, chromium between 5 % und 33 %, silicon with a weight share of not more than about 5 %, or titanium with a weight share of not more than about 3 %.

2. Material according to one of the preceding claims, **characterized in that** the share of borone is between about 1 % and about 3 %.

3. Material according to one of the preceding claims, **characterized in that** the first component has a share of molybdenium of at least about 1 %, in particular of at least about 1.5 %.

4. Material according to one of the preceding claims, **characterized in that** the first component has a share of iron of more than 35 %, in particular of more than about 37 %.

5. Material according to claim 4, **characterized in that** the share of iron is less than about 50 %, in particular between about 40 % and about 50 %.

6. Material according to one claims 4 to 5, **characterized in that** the share of nickel in the first component is between about 40 % and about 60 %.

7. Cored wire, comprising a coat and a filling substance surrounded by the coat, **characterized in that** the cored wire in total provides a material according to one of claims 1 to 6.

8. Electrode for arc welding, **characterized in that** the electrode comprises a material according to one of claims 1 to 6.

9. Device with a surface, the surface in particular being metallic, **characterized in that** the surface is coated with a material according to one of claims 1 to 6, wherein in particular the device comprises a drill head, in particular a drill head for exploring of gas and oil.

10. Method for deposition of a hard layer on a surface, comprising the step of melting and depositing of a material according to one of claims 1 to 6, the melting and depositing on the surface in particular being done by arc welding, in particular by means of a cored wire electrode.

## Revendications

1. Matériau d'enduction d'une surface au moyen d'un changement de phase au moins partiellement thermique, comprenant
un premier composant avec plusieurs constituants métalliques pour la génération d'une matrice, et un deuxième composant pour la génération d'une phase dure enfermée dans la matrice,
le premier composant présentant une proportion d'au moins environ 40% de Nickel, relatif à son poids total,
le deuxième composant présentant une proportion du poids total du matériau entre environ 20% et environ 80%,
le premier composant présentant une proportion d'au moins environ 10%, en particulier au moins environ 20%, d'un métal supplémentaire du groupe cuivre ou fer, relatif à son poids total, **caractérisé en ce que**
le deuxième composant est formé en une matière dure,
- la matière dure étant partiellement, en particulier principalement, présente en tant que carbure de tungstène fondu (WSC), ou
- la matière dure étant partiellement, en particulier principalement, présente en tant que carbure de tungstène macro-cristallin,
le deuxième composant comprenant une proportion de 0,1% à 2% du poids total du matériau en additifs ; et
le premier composant ayant une proportion en poids de nickel ne dépassant pas 70%, et en outre une proportion en poids de cuivre de 20% jusqu'à 40%, et au moins du fer avec une proportion en poids ne dépassant pas 6% et une proportion de bore entre 0,5% et 6% ;
ou le premier composant ayant une proportion en poids de nickel ne dépassant pas 70%, et en outre une proportion en poids de fer de 10% à 60%, et au moins une proportion de bore entre 0,5% et 5% ; et en particulier le premier composant comprenant en outre d'autres proportions de composants métalliques de manière cumulative ou alternative, respectivement, comme de l'aluminium jusqu'à environ 7%, vanadium jusqu'à environ 14%, niobium jusqu'à environ 11%, molybdène jusqu'à environ 12% ; tungstène jusqu'à environ 10%, chrome entre 5% et 33%, silicium avec une proportion en poids ne dépassant pas environ 5%, ou titane avec une proportion en poids ne dépassant pas environ 3%.

2. Matériau selon l'une des revendications précédentes, **caractérisé en ce que** la proportion de bore est entre environ 1% et environ 3%.

3. Matériau selon l'une des revendications précédentes, **caractérisé en ce que** le premier composant contient une proportion en poids de molybdène d'au moins environ 1%, en particulier d'au moins environ 1,5%.

4. Matériau selon l'une des revendications précédentes, **caractérisé en ce que** le premier composant contient une proportion en poids de fer de plus de 35%, en particulier de plus d'environ 37%.

5. Matériau selon la revendication 4, **caractérisé en ce que** la proportion en poids de fer ne dépasse pas environ 50%, en particulier est entre environ 40% et environ 50%.

6. Matériau selon l'une des revendications 4 à 5, **caractérisé en ce que** la proportion en poids de nickel dans le premier composant est entre environ 40% et environ 60%.

7. Fil fourré, comprenant une gaine et une substance de fourrage entourée par la gaine, **caractérisé en ce que** le fil fourré dans son ensemble forme un matériau selon l'une des revendications 1 à 6.

8. Electrode pour le soudage à l'arc, **caractérisée en ce que** l'électrode comprend un matériau selon l'une des revendications 1 à 6.

9. Dispositif avec une surface, en particulier métallique, **caractérisé en ce que** la surface est enduite avec un matériau selon l'une des revendications 1 à 6, en particulier le dispositif comprenant une tête de forage, en particulier une tête de forage pour l'exploration pétrolière et gazière.

10. Procédé pour l'application d'une couche dure sur une surface, comprenant l'étape de fonte et d'application d'un matériau selon l'une des revendications 1 à 6 sur la surface, en particulier la fonte et l'application du matériau sur la surface étant effectuées au moyen de soudage à l'arc, en particulier au moyen d'une électrode à fil fourré.
